# EUROPEAN PATENT APPLICATION

(11) **EP 4 404 152 A1**
(43) Date of publication of application: **24.07.2024**
(21) Application number: 24152560.9
(22) Date of filing: 18.01.2024
(51) Int. Cl.: G06V 20/52, G06V 20/64

(54) **AUTONOMOUS VISION SYSTEM FOR MONITORING CARGO**

(30) Priority: 18.01.2023 US 202363439701 P; 10.10.2023 US 202318484063
(71) Applicant: The Boeing Company, Arlington, VA 22202 (US)
(72) Inventor: EVANS, Nick Shadbeh, Arlington, 22202 (US); CALLAHAN, Kevin S., Arlington, 22202 (US); ASHOK, Veda, Arlington, 22202 (US); AYYAGARI, Arun, Arlington, 22202 (US); BEAJOW, Gabriel Fayez, Arlington, 22202 (US)
(74) Representative: Collins, Emily Jane

(57) **Abstract**

Devices and methods for monitoring cargo that is loaded onto a vehicle. The computing device includes memory circuitry and processing circuitry configured to operate according to programming instructions stored in the memory circuitry to: receive images of the cargo; identify the cargo within the images; based on the identification, determine one or more aspects the cargo including the volume of the cargo; and determine a position on the vehicle where the cargo is loaded based on the one or more aspects.

## Description

### RELATED APPLICATIONS

This application claims priority from U.S. Provisional App. No. 63/439,701, filed 18 January 2023, the disclosure of which is incorporated by reference herein in its entirety.

### TECHNOLOGICAL FIELD

The present disclosure relates generally to the field of cargo handling and, more specifically, to a vision system to identify cargo.

### BACKGROUND

A wide variety of vehicles are used to transport cargo. Examples include but are not limited to aircraft, ocean going vessels, and trucks. The transport process generally includes loading the cargo onto the vehicle, positioning the cargo in the vehicle, transporting the cargo from a first location to a second location, and then unloading the cargo. There is a need to identify and monitor the cargo during the transport process.

Existing systems provide various manners of identifying the cargo that is loaded onto a vehicle. However, these systems are not able to accurately determine the volume of the cargo. This leads to shipping inefficiencies as it is difficult to identify cargo containers/pallets that are not fully loaded. Further, there is no manner of measuring packing compliance according to contracted packing utilization thresholds. Without this information, it is difficult to enforce compliance.

Some existing systems use the weight of the cargo to identify and/or provide for loading the vehicle. However, it is difficult to accurately weigh the cargo due to the various sizes and dimensions of the cargo. Further, even if the weight is accurately determined, it is difficult and/or ineffective to determine the volume based on the weight. Without an accurate volume determination, inefficiencies in the loading process continue to occur.

Some existing systems require an operator to visually inspect the cargo. The operator determines the efficiency of the packing based on the observed aspects of the cargo. However, the visual identification of the cargo has been found to be inaccurate. The criteria for determining the volume are subjective and lead to inaccurate results between different operators.

Because the existing systems do not provide for accurate volume estimation, the loading of individual cargo and the overall loading of the vehicle suffer. Further, there is no mechanism to identify the inefficiencies that allow for additional packing/repacking of the cargo.

[

### SUMMARY

One aspect is directed to a computing device configured to monitor cargo that is being loaded onto a vehicle. The computing device comprises memory circuitry and processing circuitry configured to operate according to programming instructions stored in the memory circuitry to: receive images of the cargo from at least one electro-optical sensor affixed to the vehicle; identify the cargo within the images; compute one or more aspects of the cargo including a volume of the cargo; determine a position on the vehicle where the cargo is loaded based on the images of the cargo; and based on the loaded position on the vehicle, associate one or more aspects with the cargo including the volume of the cargo.

In another aspect, the processing circuitry is further configured to identify the cargo based on at least one of the images.

In another aspect, the processing circuitry is configured to: determine a temporary position of the cargo within an alignment area of the vehicle; determine a lane within the vehicle that the cargo enters after being positioned at the alignment area; and determine a location along the lane where the cargo is finally positioned.

In another aspect, communication circuitry is configured to upload through a communication network the position of the cargo on the vehicle while onboard the vehicle.

In another aspect, the processing circuitry is configured to use semantic segmentation to identify a first set of pixels in the images as the cargo and identify a different second set of pixels as another object through semantic segmentation and determine a confidence value of an identification of the cargo.

In another aspect, the processing circuitry is further configured to: identify the cargo within the images with a bounding box that encapsulates each instance of the cargo; and determine a confidence value of an identification of the cargo .

In another aspect, the processing circuitry is configured to determine a point on the cargo based on the images and track the position of the cargo within the vehicle based on the point.

In another aspect, the processing circuitry is further configured to: receive the images from a primary camera and one or more subordinate cameras; select the images from the primary camera that capture the cargo; select the images from the one or more subordinate cameras that were taken at the same time as the images that are selected from the primary camera; and identifying the cargo based on just the selected images.

In another aspect, the processing circuitry is further configured to discard the images that were not selected from the primary camera and the one or more subordinate cameras.

In another aspect, the processing circuitry is further configured to calculate one of a 3D mesh or a 3D point cloud of the cargo based on the images and determine the volume of the cargo using the 3D mesh or the 3D point cloud.

One aspect is directed to a computing device configured to monitor cargo that is being loaded onto a vehicle. The computing device comprises memory circuitry and processing circuitry configured to operate according to programing instructions stored in the memory circuitry to: receive images of the cargo from a plurality of electro-optical sensors; analyze the images and identify the cargo; determine a point on the cargo based on the images; and determine a position on the vehicle where the cargo is loaded during transport by the vehicle.

In another aspect, the processing circuitry is further configured to determine a shape of the cargo and dimensions of the cargo.

In another aspect, the processing circuitry is further configured to select a limited number of the images received from the plurality of electro-optical sensors and identify the cargo based on the limited number of images.

In another aspect, the processing circuitry is further configured to: receive the images from a primary camera and one or more subordinate cameras; select the images from the primary camera that capture the cargo; select the images from the one or more subordinate cameras that were taken at the same time as the images that are selected from the primary camera; and analyze and identify the cargo based on just the selected images.

In another aspect, the processing circuitry is configured to discard the images that were not selected from the primary camera and the one or more subordinate cameras.

One aspect is directed to a method of monitoring cargo that is being loaded onto a vehicle. The method comprises: receiving images of the cargo from a plurality of electro-optical sensors; determining a working set of the images comprising a limited number of the images; identifying the cargo within the working set of the images; determining a point on the cargo based on the working set of the images; determining a volume of the cargo based on the working set of the images; and determining a position on the vehicle where the cargo is loaded during transport by the vehicle.

In another aspect, the method further comprises discarding the images that do not capture the cargo.

In another aspect, the method further comprises: selecting the images from a primary camera that capture the cargo; selecting the images from one or more subordinate cameras that were taken at the same time as the images that are selected from the primary camera; and creating the working set from the selected images.

In another aspect, the method further comprises transmitting to a remote node the position of the cargo on the vehicle with the transmitting occurring while the cargo is loaded on the vehicle.

In another aspect, the method further comprises determining the one or more aspects of the cargo based on a limited number of the images that are received.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is a flowchart diagram of a method of using a vision system.
Figure 2 is an isometric view of a vehicle with a vision system.
Figure 3 is an isometric view of cargo being loaded through an opening in a vehicle.
Figure 4 is a schematic diagram of a vision system that includes a computing device and cameras.
Figure 5 is a flowchart diagram of a method of monitoring cargo that is being loaded onto a vehicle.
Figure 6 is a schematic diagram of cargo that is identified within an image.
Figure 7A is a chart of images that are captured by different cameras.
Figure 7B is a chart of images that are captured by different cameras.
Figure 7C is a chart of images that are captured by different cameras.
Figure 8 is a set of images that each capture cargo.
Figure 9 is a schematic diagram of an interior space of a vehicle.
Figure 10 is a schematic diagram of an interior space of a vehicle with loaded cargo.
Figure 11 is a schematic diagram of a communication network.
Figure 12 is a schematic diagram of a computing device that is part of a vision system.
Figure 13 is a schematic diagram of an application of the vision system.

### DETAILED DESCRIPTION

The present disclosure is directed to an autonomous vision system for volumetric cargo volume estimation. One specific application is for use during loading of cargo onto a vehicle. Accurate volume estimations for the cargo can then be used to determine a variety of analytics, including but not limited to the volume of the cargo, the dimensions of the cargo, and the placement of the cargo within the vehicle. The analytics also include vehicle loading aspects such as efficiency of the loaded vehicle, and the location of cargo within the vehicle. Inefficiencies can be identified during transport and can be addressed, such as by unloading the cargo, adding additional materials to the cargo to increase the efficiency, and then reloading the repacked cargo.

The system is an autonomous system. This minimizes and/or eliminates operator intervention. The system utilizes images that are automatically captured by electro-optical sensors. The system further utilizes a machine learned image data quality filter to reduce the amount of number of images and thus the volume of data that is used for 3D image analysis. The system is also configured to reduce data fidelity and dynamic data upload/egress to match connectivity and can prioritize the data that is transmitted to one or more remote nodes. In one example, the system is integrated with the vehicle providing for its use at the various locations where the vehicle operates. In another example, the system is mounted at a stationary geographic location, such as a warehouse or airport loading facility.

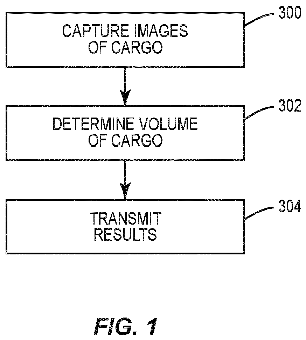

Figure 1 illustrates a high-level overview of the processing of the vision system. The processing includes capturing images of the cargo (block 300). The captured images are then analyzed to determine the volume of the cargo (block 302). This information is then sent to one or more remote nodes (block 304).

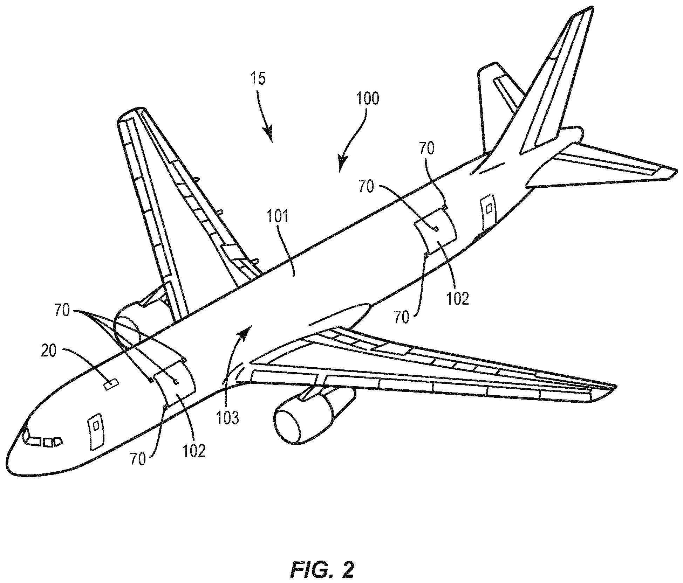

In one example, the vision system 15 is integrated in a vehicle 100 that is configured to transport cargo. The vision system 15 includes electro-optical sensors 70 that capture images of the cargo, and a computing device 20 that determines the volume and provides for sending the data to a remote node. Figure 2 illustrates a specific example in which the vehicle 100 is an aircraft. The vehicle 100 includes a fuselage 101 that includes an interior space 103 configured to hold the cargo. One or more doors 102 provide for loading and unloading the cargo within the interior space 103.

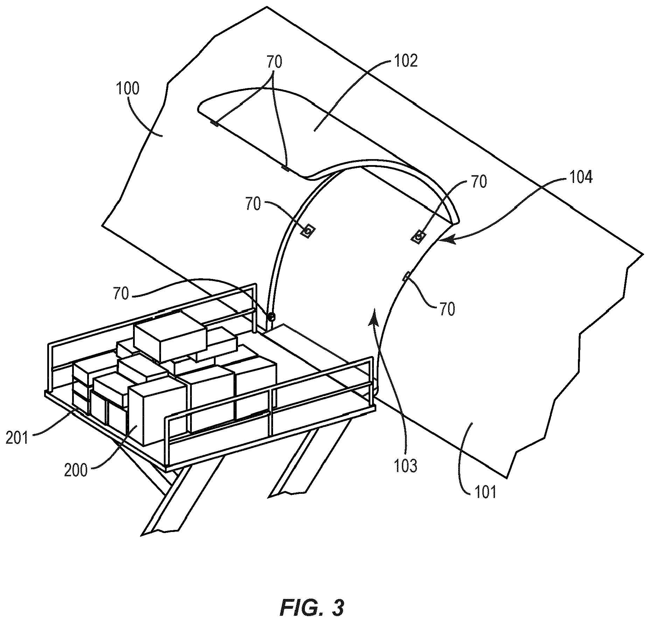

Figure 3 illustrates cargo 200 being positioned on a platform 201 for loading into the vehicle 100. The door 102 in the vehicle fuselage 101 is in an open position. This provides for the cargo 200 to be moved through the opening 104 in the fuselage 101 and into the interior space 103. The cargo 200 can have various shapes and sizes. In one example, cargo 200 includes a unit load device (ULD) that includes a container used to load luggage, freight, and mail on wide-body and specific narrow-body aircraft. In another example, the cargo 200 includes smaller containers (e.g., boxes, crates) that are positioned on a pallet and held together with wrapping material.

Electro-optical sensors 70 are positioned on the vehicle 100 to capture images of the cargo 200 as it is being moved through the opening 104. The following disclosure will include the electro-optical sensors 70 being cameras, although other types of electro-optical sensors can be used to capture images of the cargo 200. The cameras 70 are mounted to the vehicle 100 at various locations, including on one or more of the door 102, on the fuselage wall at the opening 104, and within the interior space 103. The cameras 70 are configured to capture individual discrete images of the cargo 200 and/or video of the cargo 200. The cameras 70 are configured to capture two-dimensional and three-dimensional images.

In one example, multiple cameras 70 are positioned at each of the doors 102. In one specific example, three cameras 70 are positioned at each of the doors 102 of the vehicle 100. The cameras are positioned to capture images of the cargo 200 from different perspectives. The cameras 70 are positioned to obtain dissimilar perspectives of the cargo 200. The different perspectives provide for capturing the different sides of the cargo 200 to provide for more accurate volume estimation and provides for redundant images in the event one or more of the cameras 70 is non-operational or the view is blocked.

In one example, the cameras 70 includes a fixed field of view. This provides for sequences of images to be captured that include the cargo 200 moving across the field of view. For example, a first image in the sequence captures the cargo 200 at a first side of the image, a second image captures the cargo 200 at a center of the image, and a third image captures the cargo on an opposing second side of the field of view.

In one example, the cameras 70 are equipped with heaters. The heaters prevent/reduce condensation which could occlude the view of a camera. Additionally or alternatively, the cameras include a polarizer to mitigate glare from a bright light source (e.g., sunlight/headlights). In one example, the cameras 70 are passive cameras that do not include active energy such as lasers. The passive cameras make it more suitable for deployment and operation at airports that have restrictive requirements.

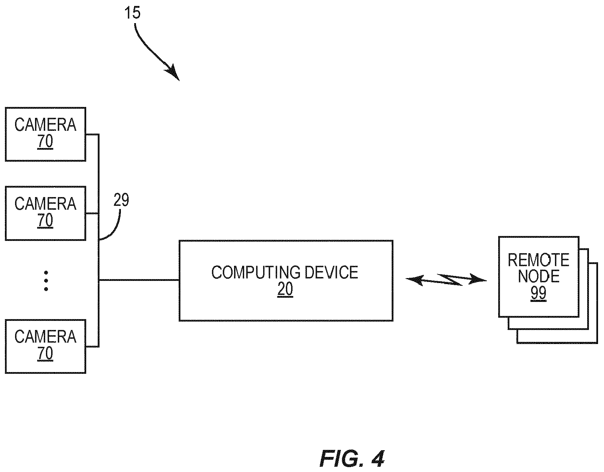

Figure 4 illustrates a schematic diagram of a vision system 15 that includes a computing device 20 and cameras 70. In one example, the cameras 70 communicate with the computing device 20 through a data bus 29. The system utilizes power over Ethernet to enable delivery of the camera data from the cameras 70 to the computing device 20. The cameras 70 can send the images to the computing device 20 through various other wireless and wired structures.

In one example, the vision system 15 is integrated with the vehicle 100. The computing device 20 can be a stand-alone device that provides just for the computation of the cargo 200. In another example, the computing device 20 performs one or more additional functions. For example, the computing device 20 can be part of the flight control computer that oversees the operation of the vehicle 100. In another example, the computing device 20 is part of an overall vision system that comprises cameras 70 located throughout the vehicle 100 and is used for monitoring passengers and/or cargo. In yet another example, the computing device 20 is located remotely from the vehicle 100. One example includes the computing device 20 being a remote server that receives the images from the cameras 70 and processes the vision data.

The computing device 20 receives the images from the cameras 70. The computing device 20 is configured to use a combination of machine learned perception, photogrammetry, and automated software modules to automatically process and deliver data in real time. The computing device 20 is configured to process the data in a timely manner which can range from minutes to hours depending upon the amount of data and the needed parameters of the job. In one example, the computing device 20 is configured to process the images and determine volume calculations within 20 minutes of receiving the images from the cameras 70.

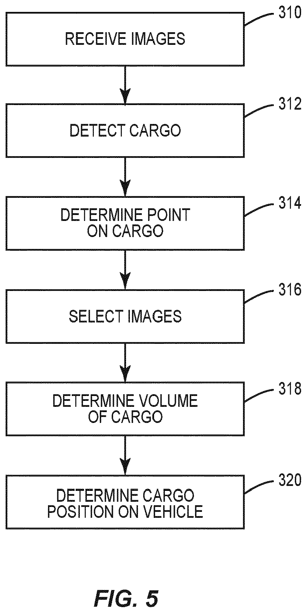

Figure 5 illustrates a method of determining a volume of the cargo 200 and the position on the vehicle 100. Initially, the cameras 70 capture images of the cargo 200. The number of images may vary. The images are received by the computing device 20 (block 310). The computing device 20 processes the images to identify the cargo 200 (block 312) and determines a point on the cargo 200 that is used for tracking (block 314). A subset of images is selected for further processing (block 316) to determine the volume of the cargo (block 318). The computing device 20 uses the available information to determine the position of the cargo 200 on the vehicle 100 (block 320). Based on the position where the cargo 200 is located, one or more aspects including the volume is associated with the cargo 200.

The cargo detection (block 312) identifies the cargo 200 within the images that are sent from the cameras 70. In one example, the identification uses semantic segmentation and a bounding box to identify the location of the cargo 200 within an image. Semantic segmentation is a deep learning algorithm that associates a label or category with the pixels in the image. The computing device 20 identifies the collection of pixels that form the cargo 200. The computing device 20 also identifies the pixels in the image that are not part of the cargo 200. In some examples, these other pixels are identified as a different object.

In one example, the computing device 20 is trained through the use of a convolutional neural network to perform the cargo detection. The convolutional neural network is a deep learning algorithm that takes an image, assigns an importance such as weights and biases to the various different aspects in the image, and is able to differentiate the aspects. In one example, the computing device 20 is trained using training images that are stored at a training library. The training images can be a separate storage within the computing device 20, part of memory circuitry, or a separate component stored remotely from the computing device 20 such as a remote database. In one example, the training images are captured from different perspectives than the perspectives captured by the cameras 70. In another example, the training images include videos of cargo 200 in different settings (e.g., cargo on a runway of a loading area, cargo being moved by an airport cart). In one specific example, the videos are obtained from YOUTUBE.

In addition to detecting the cargo 200 within the image, the process further determines the shape and size of the cargo 200. This analysis is based on the semantic segmentation that classifies the cargo 200 relative to other areas in the images. Based on the classified pixels, an overall size and dimensions of the cargo 200 is determined.

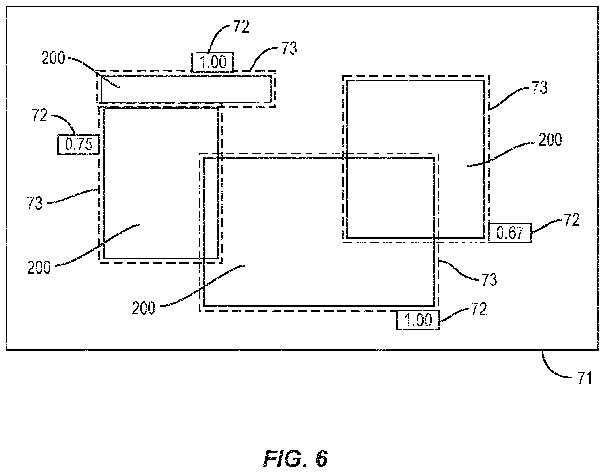

The cargo detection process analyzes the images and identifies cargo 200 in the image. Based on the results of the analysis, the algorithm assigns a confidence value to the identified cargo in the image. The confidence value is how likely the identified aspect of the image is actually cargo. In one example, the confidence value ranges from 1.00 (highest confidence value) and reduces downward. Figure 6 illustrates an image 71 that has been analyzed by the computing device 20. The analysis identifies the various separate cargo 200 that are visible in the image 71. A bounding box 73 is formed that encapsulates the identified cargo 200. A confidence value 72 is determined for each cargo 200. In this example, the confidence value 72 is higher for the cargo 200 that is more fully visible in the image 71. Cargo 200 that is more hidden in the image 71 have lower confidence values 72. In one example, the confidence values are determined using standard object detection using a neural network.

The process includes identifying a point on the cargo (block 314). This point provides for the cargo 200 to be tracked in the different images 71, such as when the cargo 200 moves through the field of view of the cameras 70. In one example, this includes determining the location of a particular point of the cargo 200 within the image 71. For example, the position of a centroid of the cargo 200 within the image 71. Other examples include selecting a different point on the cargo 200, such as but not limited to a corner, a point on a top edge, and a point on a bottom edge.

In some examples, the point is positioned along a section of the cargo 200 that is consistent in multiple images 71. For example, cargo 200 includes a rigid ULD container. The point selected is located along one of the sides as each side is rigid and does not move relative to the other sections of the cargo 200. In another example, the cargo 200 is a stack of boxes with a tarp loosely extending over the boxes. The point selected for the cargo 200 is on one of the boxes that is not covered by the tarp because the tarp is movable and has a different relative position in the different images 71. In some examples, a feature on the bottom of the cargo 200 is selected as a default point. The bottom is usually a rigid member (e.g., pallet, rigid side of a ULD) that is less likely to move than other sections of the cargo 200.

In some examples, the images 71 include a time stamp indicating the time at which the image was captured. The time stamp can be applied by the camera 70 or the computing device 20. The time stamp can be used by the computing device to track the movement of the cargo 200 and the different images that are captured by the cameras 70.

In vision systems 15 that use multiple cameras that capture images over a period of time, the number of images can result in large amounts of data. The process includes selecting a limited number of images from the total images that were captured by the cameras 70 (block 316). The limited number of images is a working set that is less than the total number of images received from the cameras 70. The selection reduces the amount of data that is to be processed which reduces storage and processing power and reduces processing time. The use of the selected images results in better image analysis when determining the volume of the cargo.

The image selection process identifies and selects images 71 in which the identified point is located at a predetermined area. In one example, the selection uses a spatial-temporal filter to select the images. The computing device 20 receives a series of images and/or a video sequence that are captured over a period of time in which cargo 200 moves through the field of view of the one or more cameras 70. The computing device 20 identifies the cargo 200 and identifies the point through spatial and temporal filter. For earlier images in the sequence, the point is within a first area of the image. Later images in the sequence include the point having moved from the first area to a second area of the image. Final images in the sequence include the point having moved to a third area. In one example, the images include a sequence of the cargo 200 that is being loaded onto a vehicle 100. The cargo 200 moves through the field of view within the sequence from left to right. The earlier images include the cargo 200 located along a left side of the images, later images include the cargo 200 located along a center of the image, and then the images eventually include the cargo 200 along the right side of the image. The computing device 20 uses the spatial-temporal filtering to select images in which the identified point is positioned at the expected area of the image.

In another example, the computing device 20 selects images in which the selected point is within a selected area of the image. For example, the selected area is centered at a center point of the image. Images are used in which the identified point falls within the predetermined area.

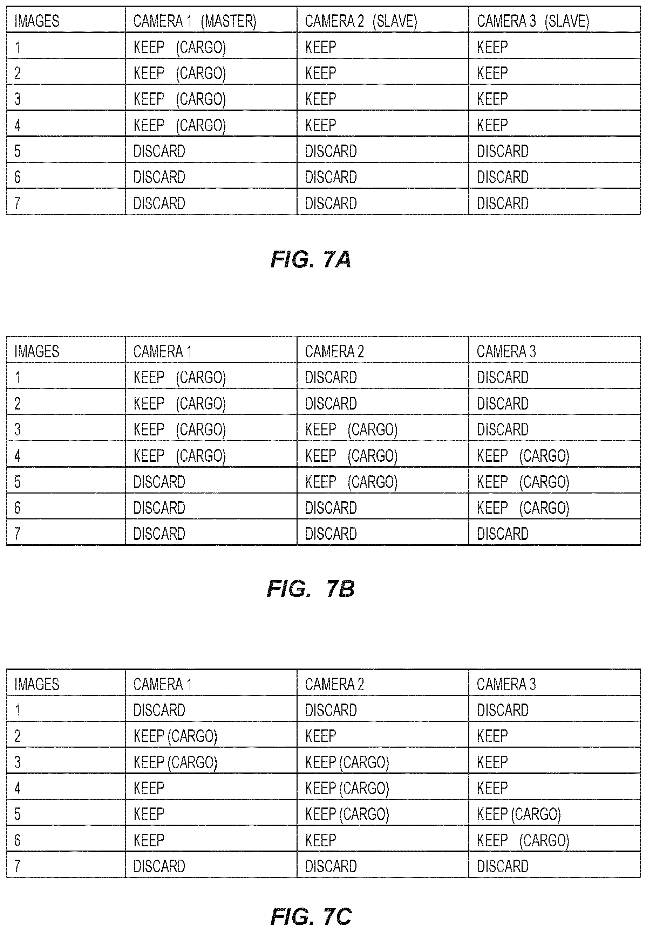

In some examples, the images are selected or discarded based on a camera hierarchy. One example includes one of the cameras 70 being a primary and the other cameras 70 being subordinates. Images that include the cargo that are captured by the primary are saved as are images captured by the subordinates at the same time. Images captured by the primary that do not include the cargo are discarded, as are images captured by the subordinates at the same time. Figure 7A illustrates an example of the primary-subordinate arrangement with camera 1 being the primary and cameras 2 and 3 being subordinates. Each of the cameras captures seven images each at a different time (e.g., a progression of images that are each a predetermined time apart). The first four images (images 1-4) captured by camera 1 include the cargo and are therefore saved. The images captured at the same times by cameras 2 and 3 are also saved. These images from cameras 2 and 3 may or may not include the cargo. Images 5-7 captured by camera 1 do not include the cargo and are therefore discarded. Likewise, images 5-7 captured by cameras 2 and 3 at the same time are also discarded (whether they capture the cargo or not).

In another example, each of the cameras 70 are independent. Images captured by any of the cameras 70 that include the cargo 200 are kept. Images captured by the cameras that do not include the cargo 200 are discarded. Figure 7B illustrates an example with independent cameras. Images 1-4 from camera 1 are kept because they include the cargo 200. Images 5-7 from camera 1 are discarded because they did not capture the cargo. Images 3-5 of camera 2 are kept with images 1, 2, 6, and 7 being discarded. Images 4-6 of camera 3 are kept with images 1-3 and 7 discarded.

In another example, if any camera captures an image that includes the cargo, then the images from that time are kept for each of the cameras. Images captured at times when the cargo is not captured by any camera are discarded. Figure 7C includes each of the first images of cameras 1-3 being discarded because none of the images captured the cargo. The second images from each of the cameras is kept because the image of camera 1 captured the cargo. The third images from each camera are kept because cameras 1 and 2 captured the cargo. The fourth images are kept because camera 2 captured the cargo. The fifth images are kept because cameras 2 and 3 captured the cargo. The sixth images are kept because the third camera captured the cargo. The seventh images from the cameras are discarded because none of the images captured the cargo.

Figures 7A-7C include examples with three cameras. It is understood that these hierarchies for filtering images can be applied to vision systems with various numbers of cameras. Further, Figures 7A-7C include examples with the non-selected images being discarded. In other examples, the non-selected images are stored but are not used as part of the cargo analysis.

The one or more filtering steps provides for selected images to be kept and used for volume estimation. The non-selected images are not used for this process. The non-selected images can be stored either at the computing device 20 or sent to a remote storage location, such as a remote database. In some examples, the non-selected images are discarded.

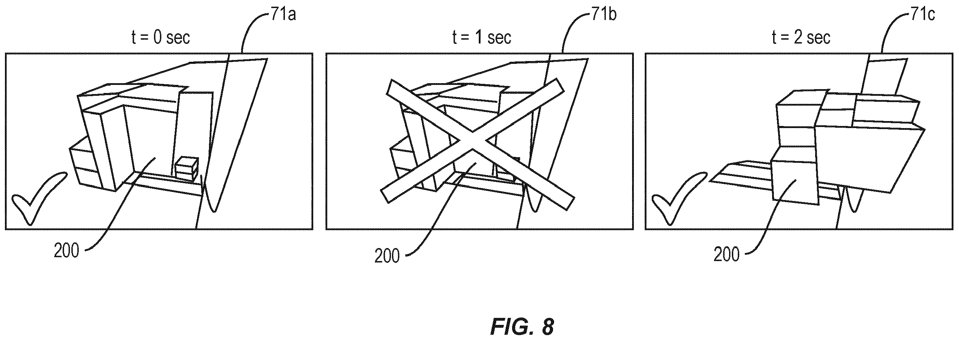

In one example, the frame selection also determines redundant images 71. The redundant images 71 are filtered out of the data for future image processing to again limit the data storage and processing capacity while still providing the necessary images 71 for the image analysis. Figure 8 illustrates a sequence of images 71a, 71b, 71c that were captured by a camera 70 over a time period. The frequency of the captured images 71 can vary. Each of the images 71a-71c captures cargo 200 that is being loaded onto a vehicle 100. Because of the frequency of the image capture and/or the speed of the cargo 200 being loaded into the vehicle, each image is similar with the cargo 200 located at substantially the same position in the image 71. The algorithm is configured to detect the redundancy of multiple images 71 and remove one or more of the images such that it will not be used for subsequent image analysis. In this example, the second image 71b is determined to be redundant and removed.

In one example, algorithm utilizes semantic segmentation that tracks one or more of the centroid, area, and contour geometry of the cargo 200. The algorithm computes a spatial distribution for each image 71. An effective spatial distribution is computed across the image set and used to determine the redundancy.

In some examples as disclosed above, the processes use just selected images for additional processing. In other examples, the processes use all of the images that are captured by the cameras 70.

The additional processing of the images includes determining a volume of the cargo 200 (block 318). The processing includes determining the various dimensions (e.g., height, length, width) and/or contours of the cargo 200. In one example, the volume determination uses a series of processing steps including photogrammetry, auto mesh closure, and volume estimation.

Photogrammetry determines physical characteristics about the cargo 200 based on the images 71. In one example, the process determines a 3D volumetric mesh based on the images 71. The process extracts three-dimensional measurements from the images. In one example, the process determines the distance between two points on the cargo 200 based on two identified points on the image 71 relative to the scale of the image. In one example, the process uses grayscale images when determining the measurements.

The processing creates a 3D volumetric mesh of the cargo 200 based on the images 71. The processing uses fixed parameters and determines the perspective of the images 71 in six degrees of freedom (e.g., the location of the camera 70 relative to the cargo 200 when the image was captured). The process estimates a set of pairs of visual features between the images 71, and then computes an estimated sparse 3D point cloud from the matched visual features. The process further matches a 3D mesh to the points. The process further includes auto mesh closure that fills in gaps in the model. The gaps are caused by insufficient data that can be determined from the images 71. The process identifies holes caused by lack of data that are within the formed 3D model. The process then analyses the existing shape of the 3D and matches the shape to complete the remainder of the 3D model. Once the model is complete, the process determines the volume of the cargo 200. The volume estimation can include determining the dimensions of the 3D model based on the scale and then performing calculations to determine the volume.

In another example, the image analysis determines the volume using measurements from the images and the known scale of the images. Distances between identified points on the image are calculated relative to the scale to determine the dimensions of the cargo 200.

The process further includes determining the position of the cargo 200 within the interior space 103 of the vehicle 100 (block 320). This process uses the images to determine where the cargo 200 is located in the vehicle 100, and the known layout of the vehicle 100 to determine the position.

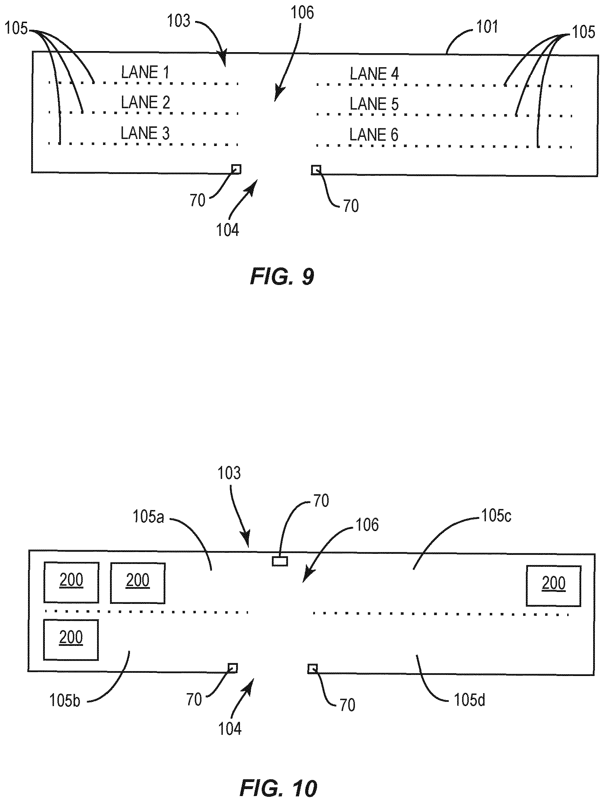

Figure 9 illustrates the interior space 103 and the opening 104 in the fuselage 101 where the cargo 200 is loaded into the vehicle 100. The interior space 103 further includes an alignment area 106 inward from the opening 104. The alignment area 106 provides for aligning the cargo 200 along one of the lanes 105 that extend into the interior space 103. During loading, the cargo 200 is moved into the alignment area 106, aligned with one of the lanes 105, and then moved down the selected lane 105. The cargo 200 is moved along the lane 105 until reaches the end of the lane 105 or the other cargo 200 that is already loaded in the lane 105. Figure 9 includes an example in which the interior space 103 includes six lanes 105. Other layouts include more or less lanes 105 in various configurations.

One or more of the cameras 70 are positioned to capture images of the cargo 200 that is aligned in the alignment area 106. The computing device 20 determines the position of the cargo within the alignment area 106. In one example, the computing device 20 tracks the identified point on the cargo 200 and determines the location relative to the lanes 105. The computing device 20 determines that the cargo 200 is aligned with a particular lane 105 based on the position of the point within the interior space 103. In one example, the centroid of the cargo 200 is tracked and determined to align with one of the lanes 105. In another example, the computing device 20 determines when the identified point such as the centroid crosses a pre-designated threshold in the alignment area 106 to identify each of the lanes 105. In the various examples, the computing device 20 further monitors the motion of the cargo 200 to determine which lane 105 is being entered. For example, computing device 20 tracks that cargo is aligned in the alignment area 106 with a particular lane (e.g., lane 4), and then monitors the movement of the cargo along the lane (e.g., along lane 4) to ensure the initial lane determination is accurate.

Figure 10 illustrates an example in which there are four lanes 105a-105d within the interior space 103. Two units of cargo 200 are already loaded in lane 105a, and one unit of cargo 200 in each of lanes 105b, 105c. For a subsequent unit of cargo 200, the computing device 20 determines the location of the cargo 200 within the alignment area 106 to determine the applicable lane 105. In one example, the computing device 20 further confirms the lane 105 by monitoring the movement along at least an initial section of the lane 105. In one example, the loading includes moving the cargo 200 as far into the lane 105 as possible. In another example, the cargo 200 can be located at any position along the lane 105.

The computing device 20 further maintains a record 80 of the location of the cargo 200 in the vehicle 100. The record 80 includes the lane 105 and the position within the lane 105. Using Figure 10 as an example, a subsequent unit of cargo 200 loaded into the lane 105b is listed as lane 105b, second position. A subsequent unit of cargo 200 loaded into lane 105a would be located at lane 105a, position three. In addition to the position, the computing device 20 associates the calculated volume characteristics with the cargo 200. This relationship provides for the computing device 20 to locate a particular unit of cargo 200 and the associated dimensions.

The position of the cargo 200 within the interior space 103 and the known volume can be used for various analytics. Examples of analytics include the efficiency of the individual units of cargo, such as the cargo volume, cargo size, cargo density, and identifying the cargo 200. Additionally or alternatively, the analytics can be on a vehicle level to determine the efficiency of the loaded interior space 103.

The data determined by the computing device 20 is delivered to one or more remote nodes 99. The system is configured to detect connectivity and bandwidth of the communication capacity with the nodes 99. The computing device 20 can package data into varied levels of fidelity for prioritized data egress. In one example, this includes delivering the smallest and highest value data first so it can be acted upon prior to the vehicle 100 reaching the destination. The system can also egress actionable data to the cloud which is then delivered to one or more remote nodes.

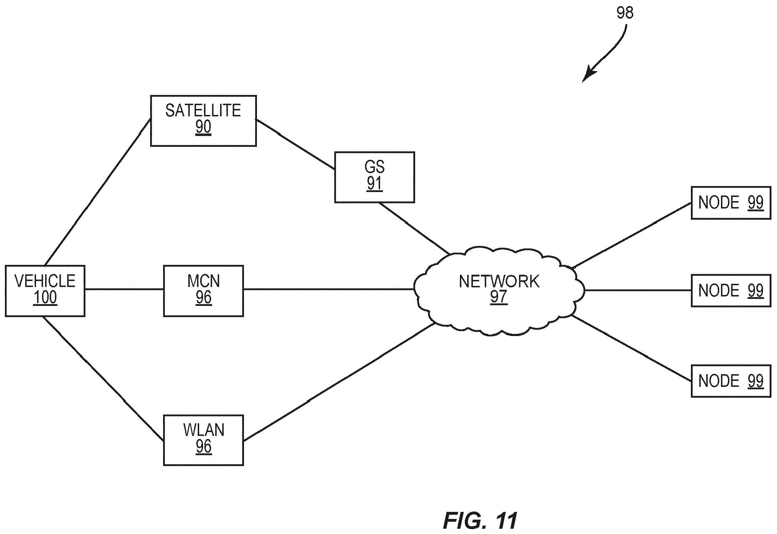

The vehicle 100 is configured to communicate with a remote node 99 through one or more different communication channels. As illustrated in Figure 11, the communications occur through a wireless communication network 98. The wireless communication network 98 can include a packet data network (PDN) 97. The PDN 97 can include a public network such as the Internet, or a private network. The wireless communication network 98 can include a mobile communication network (MCN) 96 (e.g., a WCDMA, LTE, or WiMAX network). The MCN 96 includes a core network and a radio access network including one or more base stations. The MCN 96 can be a conventional cellular network operating according to any communication standards now known or later developed. For example, the MCN 96 can comprise a Wideband Code Division Multiple Access (WCDMA) network, a Long Term Evolution (LTE) network, or WiMAX network. The MCN 96 is further configured to access the PDN 97.

The vehicle 100 can also communicate through a Wireless Local Area Network (WLAN) 95 that operates according to the 802.11 family of standards, which is commonly known as a WiFi interface. Communications can also be available through one or more satellites 90. The satellites 90 can communicate through one or more of ground stations 91.

The vehicle 100 can use the different channels of communication at different times. For example, an aircraft during flight can communicate using satellites 90. The same aircraft can communicate through the MCN 96 and/or WLAN 95 when on the ground and parked at an airport.

The computing device 20 is configured to measure and estimate real-time available bandwidth. In some examples, the computing device 20 utilizes an onboard internet connection and uploads an initial set of lightweight data. In one example, the lightweight data is about 1MB. The lightweight data is of a known size and uploaded over a given time. The computing device 20 then estimates the available internet connection speed. In one example, the computing device 20 analyzes the internet connection and either automatically selects either the Aircraft Communications Addressing and Reporting System (ACARS) via satellite and/or VHF communications to transmit the lightweight data. In other examples, the computing device 20 uses different communication links to transmit the data. Additionally or alternatively, the vehicle utilizes LTE/4G cellular data and a vehicle antenna to upload the data from the vehicle at the time of measurement.

In one example, the computing device 20 differentiates three fidelity levels. A lightweight fidelity level includes numerical/integer value data such as but not limited to a numeric volume, cubic data, percentage of volume usage. An intermediate fidelity level is for single images that can be at various resolutions. A third higher fidelity level includes 3D models and mesh models. In one example, the 3D models range in size from 1.2MB to 6.0 MB.

The computing device 20 can also access a loading instruction report (LIR). The LIR is used by operators loading the vehicle 100 and provides instructions where to load and position the cargo 200 on the vehicle 100 to comply with weight and balance limits. In the event of an absence of LIR data, the computing device 20 utilizes a real-time last in - first out (LIFO) system to begin the analytics.

The computing device 20 receives requests for analyzing the cargo 200. The requests are transmitted to the vehicle 100 by a remote node 99 (e.g., a customer). The loaded requests are reprioritized as necessary to expedite the computation of volume and other analytics.

The computing device 20 purges stale data from the computing device 20 to prevent the memory circuitry from becoming filled. The computing device 20 monitors the remaining storage available in the memory circuitry and purges excess data when a storage threshold is reached. In one example, the computing device 20 periodically runs schedule storage assessments that evaluate the remaining storage. If the remaining storage falls below a threshold, the data based on the time the data was recorded is removed. This can include deleting the data or storing the data at another location. In one example, the module is used as sufficient data egress bandwidth is not available to the vehicle during normal operations. In one example, the computing device 20 periodically obtains a viable internet connection and the data is uploaded to another storage location rather then being deleted.

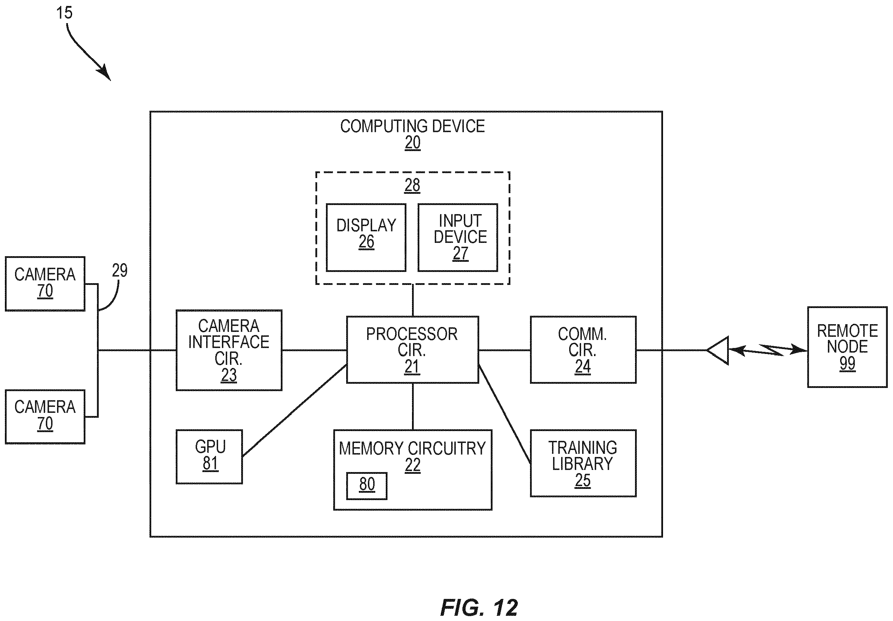

As illustrated in Figure 12, the computing device 20 includes processing circuitry 21, memory circuitry 22, camera interface circuitry 23, and communication circuitry 24. The processing circuitry 51 controls overall operation of the vision system 15 according to program instructions stored in the memory circuitry 22. The processing circuitry 21 can include one or more circuits, microcontrollers, microprocessors, hardware, or a combination thereof. The processing circuitry 21 can include various amounts of computing power to provide for the needed functionality. In one example, the processing circuitry 21 has greater than one teraflops of computing power. The increased computing power can enable machine learned algorithms and/or provide for use of a convolutional neural network.

Memory circuitry 22 includes a non-transitory computer readable storage medium storing program instructions, such as a computer program product, that configures the processing circuitry 21 to implement one or more of the techniques discussed herein. Memory circuitry 22 can include various memory devices such as, for example, read-only memory, and flash memory. Memory circuitry 22 can be a separate component as illustrated in Figure 12 or can be incorporated with the processing circuitry 21. Alternatively, the processing circuitry 21 can omit the memory circuitry 22, e.g., according to at least some embodiments in which the processing circuitry 21 is dedicated and non-programmable. Memory circuitry 22 is configured to support loading of the images into a runtime memory for real time processing and storage. In one example, the memory circuitry 22 includes a solid state device (SSD).

The computing device 20 includes a graphics processing unit (GPU) 81. The GPU is a specialized electronic circuit designed to manipulate and alter the memory circuitry 22 to accelerate the creation of images in a frame buffer intended for output. The GPU 81 can include various amounts of computing power to provide for the needed functionality. In one example, the GPU 81 has greater than 1 teraflops of computing power. This processing capability provides for large scale machine learning. In one example, the computing device 20 includes a separate GPU 81. In another example, this processing is performed at the processing circuitry 21.

The memory circuitry 22 is configured to store a record 80 of the cargo 200. The record 80 includes the calculated volume and the location of the cargo 200 on the vehicle 100. The record 80 can include additional information about the cargo 200, such as but not limited to the weight, contents, particular shipping instructions, origination point, and destination point.

Camera interface circuitry 23 provides for receiving the images from the cameras 70. The camera interface circuitry 23 can provide for one-way communications from the cameras 70 or two-way communications that are both to and from the cameras 70.

Communication circuitry 24 provides for communications to and from the computing device 20. The communications can include communications with other circuitry on the vehicle 100 (e.g., vehicle control system) and/or communications with a remote node 99. Communication circuitry 24 provides for sending and receiving data with remote nodes 99. The computing device 20 automatically detects connectivity and bandwidth that are available. The computing device 20 packages data into varied levels of fidelity for prioritized data egress through the communication circuitry 24. In one example, the prioritization initially delivers the smallest and highest value/opportunity cargo data so a customer can act on it prior to the vehicle 100 arriving at the destination. In one example, the computing device 20 automatically egresses actionable data to the cloud and then delivery to customers.

A user interface 28 provides for a user to access data about the cargo 200. The user interface 28 includes one or more input devices 27 such as but not limited to a keypad, touchpad, roller ball, and joystick. The user interface 28 also includes one or more displays 26 for displaying information to regarding the cargo 200 and/or for an operator to enter commands to the processing circuitry 21.

In one example, the computing device 20 operates autonomously to process the scanned image data and output the data to one or more remote nodes. This autonomous ability minimizes and/or eliminates operator intervention which could slow the process and/or create errors.

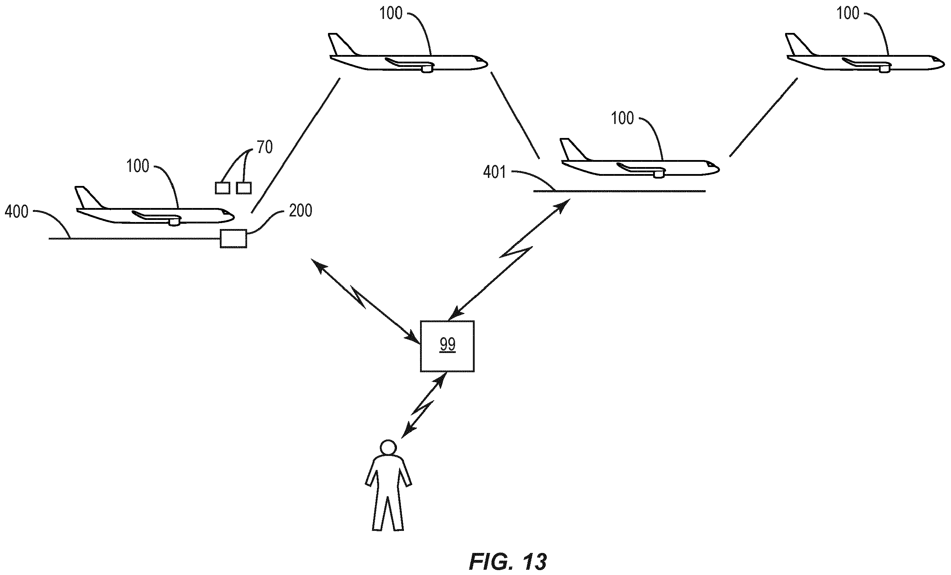

Figure 13 illustrates one application of using the vision system 15. Cargo 200 is loaded onto a vehicle 100 while the vehicle 100 is located at a first location 400. Images of the cargo 200 are captured by cameras 70 and processed to determine the volume estimation. While the vehicle 100 is transporting the cargo 200, the data is uploaded to a remote node 99 (e.g., client server) where it is accessed by the client (e.g., the entity responsible for the cargo). The data is analyzed and cargo 200 is determined to be problematic (e.g., inefficiently packed). When the vehicle 100 arrives at an intermediate location 401, the cargo 200 is removed from the vehicle 100 and re-packed to provide for a higher efficiency. The repackaged cargo 200 is then reloaded into the vehicle 100 and transported to the final destination.

In one example, the vision system 15 is integrated into a vehicle 100. The vision system 15 can used on a variety of vehicles 100. Vehicles 100 include but are not trucks, trains, ships, and aircraft.

The vision system 15 can also be used in other contexts. Examples include but are not limited to warehouses, airport loading facilities, and distribution centers. In another example, the vision system 15 is configured to identify a person. The vision system 15 receives one or more images of a person. In one specific example, the images are of a face of the person. The vision system 15 analyzes the images in a similar manner as explained above. In one example, this includes receiving multiple images and determining those that are most relevant in making an identification. For example, images in which the person's face is obscured or otherwise not fully visible are discarded. The relevant images are analyzed to identify the person. In one example, the analyzed images are evaluated relative to a database of stored images of persons. The analysis compares the captured images with the stored images to determine a match to identify the person.

By the term "substantially" with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

The present disclosure may be carried out in other ways than those specifically set forth herein without departing from essential characteristics of the disclosure. The present embodiments are to be considered in all respects as illustrative and not restrictive, and all changes coming within the meaning and equivalency range of the appended claims are intended to be embraced therein.

The following is a list of clauses of the disclosure.
1. A computing device configured to monitor cargo that is being loaded onto a vehicle, the computing device comprising:
   memory circuitry;
   processing circuitry configured to operate according to programming instructions stored in the memory circuitry to:
      receive images of the cargo from at least one electro-optical sensor affixed to the vehicle;
      identify the cargo within the images;
      compute one or more aspects of the cargo including a volume of the cargo;
      determine a position on the vehicle where the cargo is loaded based on the images of the cargo; and
      based on the loaded position on the vehicle, associate one or more aspects with the cargo including the volume of the cargo.
2. The computing device of clause 1, wherein the processing circuitry is further configured to identify the cargo based on at least one of the images.
3. The computing device of clause 1 or clause 2, wherein the processing circuitry is configured to:
   determine a temporary position of the cargo within an alignment area within the vehicle;
   determine a lane within the vehicle that the cargo enters after being positioned at the alignment area; and
   determine a location along the lane where the cargo is finally positioned.
4. The computing device of any preceding clause, further comprising communication circuitry configured to upload through a communication network the position of the cargo on the vehicle while onboard the vehicle.
5. The computing device of any preceding clause, wherein the processing circuitry is configured to:
   use semantic segmentation to identify a first set of pixels in the images as the cargo and identify a different second set of pixels as another object through semantic segmentation; and
   determine a confidence value of an identification of the cargo.
6. The computing device of any preceding clause, wherein the processing circuitry is further configured to:
   identify the cargo within the images with a bounding box that encapsulates each instance of the cargo; and
   determine a confidence value of an identification of the cargo.
7. The computing device of any preceding clause, wherein the processing circuitry is configured to determine a point on the cargo based on the images and track the position of the cargo within the vehicle based on the point.
8. The computing device of any preceding clause, wherein the processing circuitry is further configured to:
   receive the images from a primary camera and one or more subordinate cameras;
   select the images from the primary camera that capture the cargo;
   select the images from the one or more subordinate cameras that were taken at the same time as the images that are selected from the primary camera; and
   identifying the cargo based on the selected images.
9. The computing device of clause 8, wherein the processing circuitry is further configured to discard the images that were not selected from the primary camera and the one or more subordinate cameras.
10. The computing device of any preceding clause, wherein the processing circuitry is further configured to calculate one of a 3D mesh or a 3D point cloud of the cargo based on the images and determine the volume of the cargo using the 3D mesh or the 3D point cloud.
11. A computing device configured to monitor cargo that is being loaded onto a vehicle 100, the computing device comprises:
   memory circuitry;
   processing circuitry configured to operate according to programing instructions stored in the memory circuitry to:
      receive images of the cargo from a plurality of electro-optical sensors;
      analyze the images and identify the cargo;
      determine a point on the cargo based on the images; and
      determine a position on the vehicle where the cargo is loaded during transport by the vehicle.
12. The computing device of clause 11, wherein the processing circuitry is further configured to determine a shape of the cargo, and dimensions of the cargo.
13. The computing device of clause 11 or 12, wherein the processing circuitry is further configured to select a limited number of the images received from the plurality of electro-optical sensors and identify the cargo based on the limited number of images.
14. The computing device of any of clause 11 to 13, wherein the processing circuitry is further configured to:
   receive the images from a primary camera and one or more subordinate cameras;
   select the images from the primary camera that capture the cargo;
   select the images from the one or more subordinate cameras that were taken at the same time as the images that are selected from the primary camera; and
   analyze and identify the cargo based on just the selected images.
15. The computing device of clause 14, wherein the processing circuitry is further configured to discard the images that were not selected from the primary camera and the one or more subordinate cameras.
16. A method of monitoring cargo that is being loaded onto a vehicle, the method comprising:
   receiving images of the cargo from a plurality of electro-optical sensors;
   determining a working set of the images comprising a limited number of the images;
   identifying the cargo within the working set of the images;
   determining a point on the cargo based on the working set of the images;
   determining a volume of the cargo based on the working set of the images; and
   determining a position on the vehicle where the cargo is loaded during transport by the vehicle.
17. The method of clause 16, further comprising discarding the images that do not capture the cargo.
18. The method of clause 16 or clause 17, further comprising:
   selecting the images from a primary camera that capture the cargo;
   selecting the images from one or more subordinate cameras that were taken at the same time as the images that are selected from the primary camera; and
   creating the working set from the selected images.
19. The method of any of clause 16 to 18, further comprising transmitting to a remote node the position of the cargo on the vehicle with the transmitting occurring while the cargo is loaded on the vehicle.
20. The method of any of clause 16 to 19, further comprising determining the one or more aspects of the cargo based on a limited number of the images that are received.
21. The method of any of clause 16 to 20, performed using the computing device of any of clauses 1 to 15.
22. A computer readable medium configured to, when executed by a processor, cause the processor to perform the method of any of clauses 16 to 21.
23. A computing device comprising the computer readable medium of clause 22.
24. The computing device of any of clauses 1 to 15 configured to perform the method of any of clauses 16 to 20.

## Claims

1. A computing device configured to monitor cargo (200) that is being loaded onto a vehicle (100), the computing device comprising:
memory circuitry (22);
processing circuitry (21) configured to operate according to programming instructions stored in the memory circuitry (22) to:
receive images of the cargo (200) from at least one electro-optical sensor (70) affixed to the vehicle (100);
identify the cargo (200) within the images;
compute one or more aspects of the cargo (200) including a volume of the cargo (200);
determine a position on the vehicle (100) where the cargo (200) is loaded based on the images of the cargo (200); and
based on the loaded position on the vehicle (100), associate one or more aspects with the cargo (200) including the volume of the cargo (200).

2. The computing device of claim 1, wherein the processing circuitry (21) is configured to:
determine a temporary position of the cargo (200) within an alignment area (106) within the vehicle (100);
determine a lane (105) within the vehicle (100) that the cargo (200) enters after being positioned at the alignment area (106); and
determine a location along the lane (105) where the cargo (200) is finally positioned.

3. The computing device of claim 1 or claim 2, further comprising communication circuitry (24) configured to upload through a communication network (98) the position of the cargo (200) on the vehicle (100) while onboard the vehicle (100).

4. The computing device of any preceding claim, wherein the processing circuitry (21) is configured to:
use semantic segmentation to identify a first set of pixels in the images as the cargo (200) and identify a different second set of pixels as another object through semantic segmentation; and
determine a confidence value of an identification of the cargo (200).

5. The computing device of any preceding claim, wherein the processing circuitry (21) is further configured to:
identify the cargo (200) within the images with a bounding box (73) that encapsulates each instance of the cargo (200); and
determine a confidence value of an identification of the cargo (200).

6. The computing device of any preceding claim, wherein the processing circuitry (21) is configured to do at least one of:
identify the cargo (200) based on at least one of the images;
determine a shape of the cargo (200), and dimensions of the cargo (200); and
determine a point on the cargo (200) based on the images and track the position of the cargo (200) within the vehicle (100) based on the point.

7. The computing device of any preceding claim, wherein the processing circuitry is further configured to:
receive the images from a primary camera and one or more subordinate cameras;
select the images from the primary camera that capture the cargo;
select the images from the one or more subordinate cameras that were taken at the same time as the images that are selected from the primary camera; and
identifying the cargo based on the selected images.

8. The computing device of claim 7, wherein the processing circuitry (21) is further configured to discard the images that were not selected from the primary camera and the one or more subordinate cameras.

9. The computing device of any preceding claim, wherein the processing circuitry (21) is further configured to calculate one of a 3D mesh or a 3D point cloud of the cargo 200 based on the images and determine the volume of the cargo 200 using the 3D mesh or the 3D point cloud.

10. The computing device of any preceding claim, wherein the processing circuitry (21) is further configured to select a limited number of the images received from the plurality of electro-optical sensors (70) and identify the cargo (200) based on the limited number of images.

11. A method of monitoring cargo (200) that is being loaded onto a vehicle (100), the method comprising:
receiving images of the cargo (200) from a plurality of electro-optical sensors;
determining a working set of the images comprising a limited number of the images;
identifying the cargo (200) within the working set of the images;
determining a volume of the cargo (200) based on the working set of the images; and
determining a position on the vehicle (100) where the cargo (200) is loaded during transport by the vehicle (100).

12. The method of claim 11, further comprising determining a point on the cargo (200) based on the working set of the images.

13. The method of claim 11 or 12, further comprising:
selecting the images from a primary camera that capture the cargo;
selecting the images from one or more subordinate cameras that were taken at the same time as the images that are selected from the primary camera; and
creating the working set from the selected images.

14. The method of any of claims 11 to 13, further comprising transmitting to a remote node the position of the cargo (200) on the vehicle (100) with the transmitting occurring while the cargo (200) is loaded on the vehicle (100).

15. The method of any of claims 11 to 14, further comprising discarding the images that do not capture the cargo or determining the one or more aspects of the cargo (200) based on a limited number of the images that are received.
